# EUROPEAN PATENT SPECIFICATION

(11) **EP 2 559 508 B1**
(45) Date of publication and mention of the grant of the patent: **17.12.2014**
(21) Application number: 11768831.7
(22) Date of filing: 11.04.2011
(51) Int. Cl.: B23B 47/34, B23Q 11/00

(54) **BORING DEVICE**
BOHRVORRICHTUNG
DISPOSITIF DE PERÇAGE

(30) Priority: 12.04.2010 JP 2010091498
(43) Date of publication of application: 20.02.2013
(73) Proprietor: UHT Corporation, Aichi-gun Aichi 470-0162 (JP)
(72) Inventor: KAKIMOTO Masakazu, Nagoya-shi, Aichi-ken 468-0014 (JP)
(74) Representative: Hess, Peter K. G.
(86) International application number: PCT/JP2011/059037
(87) International publication number: WO 2011/129310

(56) References cited:
- EP-A1- 1 627 703
- FR-A1- 2 833 034
- JP-A- 9 103 932
- JP-A- H0 398 737
- JP-A- 57 027 606
- JP-A- 2011 101 931

## Description

### FIELD OF THE INVENTION

The present invention relates to a boring device, and more specifically, the present invention relates to a boring device for a boring material by using a drill, and for boring a bored material (work piece) which corresponds to a fiber-reinforced composite material, in particular to a non-metallic material such as CFRP (carbon fiber reinforced plastic) suitable for main wings of an airplane and a vehicle body, and for a boring material such as aluminum alloy.

### BACKGROUND OF THE INVENTION

When CFRP material is bored by a drill, minute carbon fibers broken during the boring process produces a large amount of drilling debris and are mixed into swarf, which sometimes generates harmful gas. In a case where these materials scatter in a working place, it causes working conditions extremely deteriorating. In view of these circumstances, workers are encouraged to wear dust-proof clothes and dust-proof masks, but more certain measures on recovering swarth are desired since broken carbon fibers are fine powders which are harmful to human body.

Patent literature 1 discloses a conventional device for a purpose of improving working conditions and the device that mounts a drill to a front end of a mechanical main shaft (spindle) which is rotatable in a main case via a chuck and connects an air-supplying tube which jets a compressed air to a cylindrical hood surrounding the drill, and also connects a suction tube (dust collecting tube) which sucks out inside the hood to a main case. According to this conventional device, the compressed air is jetted from the air-supplying tube toward a front end blade of the drill, the drill is cooled by this compressed air, swarf is separated from the drill and flows into air, a part of the jetted compressed air carries swarf and so forth caused by boring upward along the hood, and these materials are sucked by the suction tube and discharged outside which leads to dust collection.

Patent literature 2 discloses a variation of an air-supplying path which sends a compressed air and the path through which the compressed air sent from the air-supplying tube into a hood of a main case or a drill is jetted into a drill front end via a venting hole provided along passage end of a drill side and a shaft center of the drill.

JP-03098737 discloses a boring device comprising an inner path and an outer path which has a double tube structure, wherein a drill (C) which has a venting hole (6) on a axial center extending from a shank to the proximity of a blade and a hood (14) which covers an outer periphery of the drill is provided at a front end of a main shaft, an air-feeding mechanism which supplies a compressed air to the inner path and a dust collecting mechanism which sucks air in the outer path are connected to a rear end of the main shaft, and a work piece is bored while the compressed air is supplied around a drill blade via the inner path so that swarf generated is recovered to the dust collecting mechanism via the outer path.

### PATENT LITERATURE

Publication of unexamined patent application H6-179108
Publication of unexamined patent application H11-138319

### DISCLOSURE OF THE INVENTION

### PROBLEMS TO BE SOLVED BY THE INVENTION

However, according to the conventional devices described in patent literatures 1 and 2, the main case and the hood which surround the drill is provided with the air-supplying tube and the suction tube such that both tubes protrude, and air-feeding hose and suction hose are connected with both tubes.

However, during the boring process of using the conventional device, the air-feeding hose and suction hose are arranged at the front part of the device in the proximity of the work piece, that is, around the drill, and these parts form an entire system which is used for a compressor and a vacuum pump. Therefore, the above arrangements cause a boring machine and a boring device to be ill-balanced and the air-feeding hose and the suction hose to hinder the usage of the machine and the device, which leads to inconvenience for use and malfunctions during their operations. Since the conventional device has a structure in which a main shaft of the machine or the device is rotated by the driving source such as a motor, it is not so easy task to provide the air-supplying path and suction path in the main case because of the structural features.

The object of the present invention is to improve the balance quality of the device by removing an air-supplying tube, an air-feeding hose, a suction tube and a suction hose around the drill that is at the front part of the boring device, and to enhance usability and work efficiency so as to resolve the above-mentioned undesired conditions. Another object of the invention is to facilitate an air-supplying path and a suction path to be built into the device and to enhance downsizing and utility of the device by employing a hollow motor as a driving source and adopting a double tube main shaft as a machinery main shaft.

### SOLUTIONS TO PROBLEMS

According to an aspect of the present invention, there is provided a boring device including a main shaft which is rotated by a driving source and includes an inner path and an outer path which has a double tube structure, wherein a drill which has a venting hole on a axial center extending from a shank to the proximity of a blade and a hood which covers an outer periphery of the drill is provided at a front end of a double tube main shaft, an air-feeding mechanism which supplies a compressed air to the inner path and a dust collecting mechanism which sucks an air in the outer path are connected to a rear end of the double tube main shaft, and a work piece is bored while the compressed air is supplied around a drill blade via the inner path so that swarf generated is recovered to the dust collecting mechanism via the outer path (Claim 1).

According to the present invention, when a boring process in which the drill rotated by the driving source and through the double tube main shaft cut into work (bored material) is executed, a compressed air supplied from the air-feeding mechanism is fed by pressure to the drill blade via the inner path and the venting hole, so that minute swarf produced by cutting in the boring process is sucked and recovered from the hood around the drill to the dust collecting mechanism via the outer path, with a suction power generated in the outer path of the main shaft. When harmful gas is generated during the boring process, this harmful gas is recovered in the dust collecting mechanism together with the swarf.

The driving source is not limited to any specific types or mechanisms as long as the driving source is a rotating motor which rotates the double tube main shaft, but considering downsizing the device, it is preferable to employ the hollow motor which is arranged in a housing of the device, and in such a case, the double tube main shaft is rotatably incorporated into a rotor of the hollow motor (Claim 2).

According to the further embodiment, the combination of the hollow motor and the feeding motor is suitable for the driving source, and with this configuration, automatic feeding of the drill depending on the thickness and the material of the work piece may be executed (Claim 3). With respect to the combination of the hollow motor and the feeding motor, it is possible for both motors to be arranged along the same axis, which leads to a compact structure. However, in consideration of productivity, the feeding motor is arranged at a lower position of the hollow motor and near the hollow motor, and the double tube main shaft and the drill are fed by pitch by moving the hollow motor back and forth via feeding mechanism by driving the feeding motor (Claim 4).

### ADVANTAGES OF THE INVENTION

According to the present invention, by supplying the compressed air around the front end blade via the inner path of the double tube main shaft, swarf and so forth generated during the boring process is guided in the outer path of the double tube main shaft and sucks and recovered in the dust collecting mechanism. As such, the effect of the dust collecting may be enhanced and the working conditions are improved. Since double tube main shaft is employed, and the air-feeding mechanism and the dust collecting mechanism are connected to the rear end of the double tube main shaft, it is no longer necessary to place an air-feeding hose of the air-feeding mechanism and a dust collecting hose of the dust collecting mechanism at the front part of the device. Therefore, the balance performance of the device may be improved, as well as and the operability and the work efficiency of the device may be improved because the structure of the front part of the device is simplified. According to the constructive feature of the hollow motor and the feeding motor along with the double tube main shaft, improvement of the utility such as downsizing the device and improvement of the work efficiency may be obtained.

### BRIEF DESCRIPTION OF THE DRAWINGS

Fig. 1 is a side view illustrating a general outline in which a part of the main feature of the device according to the first embodiment is cut;
Fig. 2 is a side view illustrating a state where the hollow motor (drill) is advanced;
Fig. 3 is a side view illustrating a schematic view of the boring device of the present invention;
Fig. 4 is an enlarged side view of a main portion illustrating a state where the work piece is bored;
Fig. 5 is an enlarged cross-sectional view particularly illustrating a rear end portion of the double tube main shaft of the boring device;
Fig. 6 is a cross-sectional view taken along line (6)-(6) in Fig. 4;
Fig. 7 is a cross-sectional view taken along line (7)-(7) in Fig. 4;
Fig. 8 is an enlarged cross-sectional view of the front end of the drill in Fig. 4;
Fig. 9 is a cross-sectional view taken along line (9)-(9) in Fig. 5;
Fig. 10 is a cross-sectional view taken along line (10)-(10) in Fig. 5; and
Fig. 11 is a cross-sectional view taken along line (11)-(11) in Fig. 5.

### DETAILED DESCRIPTION OF THE INVENTION

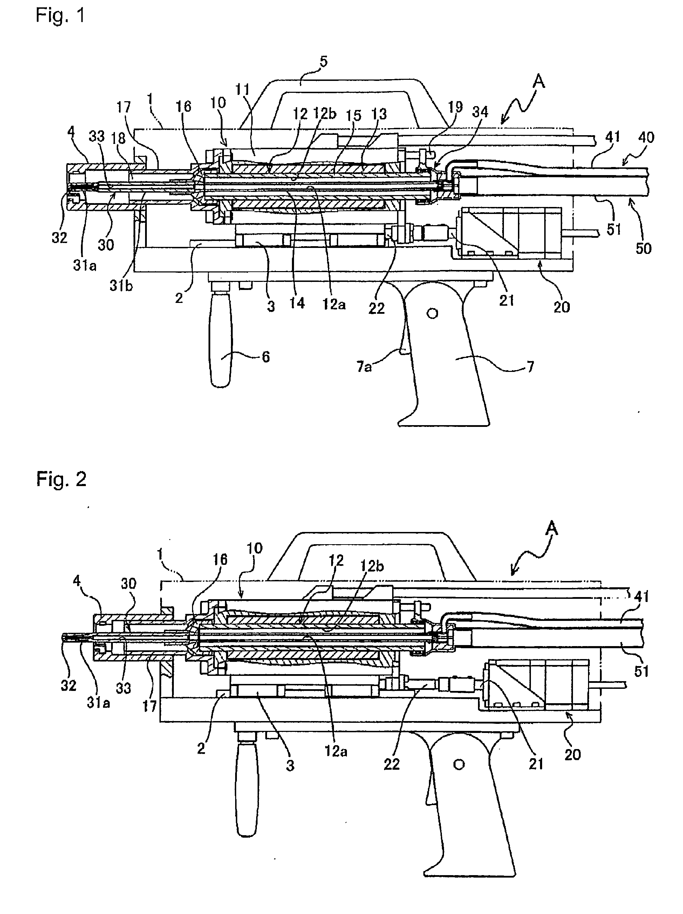

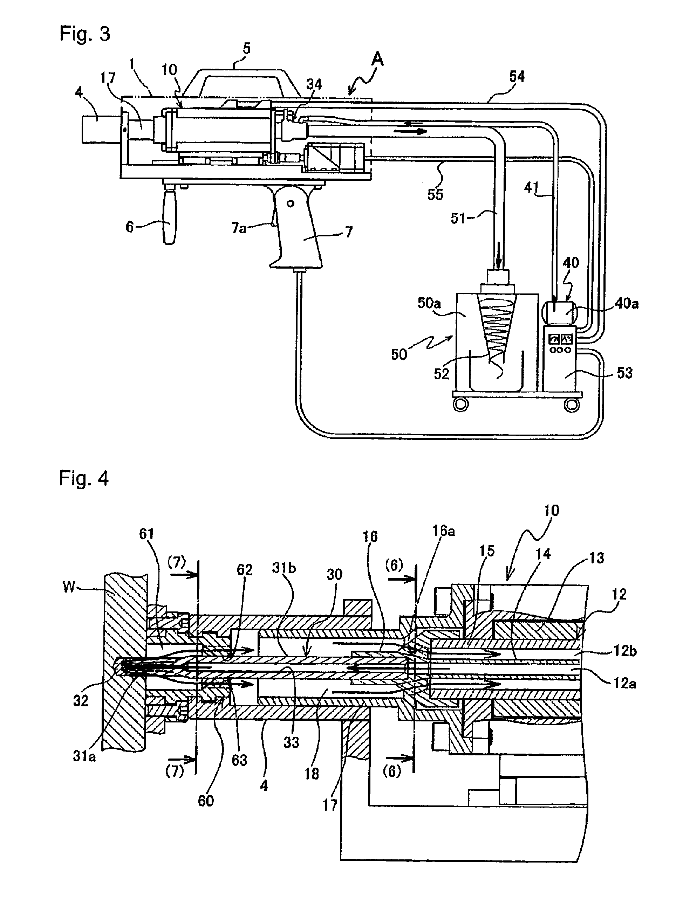

One embodiment of the boring device of the present invention is explained by drawings illustrating a handy drill device A. Fig. 1 is a side view illustrating an outline of the main feature of the device A which is partially cut and shows a structure in which a hollow motor 10 and a feeding motor20 are provided as a driving source in a housing 1. Fig. 3 illustrates an outline of the entire drill device A.

As shown in Fig. 1, the housing 1 is substantially rectangular shape, and rails 2 which extend in a front-back direction (right and left direction in drawings) at an inner bottom face are provided at a predetermined distance in a right and left direction (width direction in drawings). A slide block 3 of the hollow motor10 is slidably mounted on the rails 2. A plurality of guide members which are not shown in drawings are provided above the rails 2 in the housing 1, and an upper portion of the hollow motor 10 is slibadly supported by the guide members.

According to this configuration, the hollow motor 10 is arranged so that the hollow motor 10 moves back and forth at the substantially center portion of the housing 1.

The feeding motor 20 is provided at the rear bottom face of the housing 1, and is engaged with the hollow motor 10 so that the hollow motor 10 moves back and forth.

The hollow motor 10 and the feeding motor 20 are not limited to any particular kinds of motors, and according to this example, a servo motor is used as the hollow motor 10, and a pulse motor with its axis and a screw integrated is used as the feeding motor20.

The hollow motor10 integrally includes a mechanical shaft (spindle) at a hollow axial portion of a motor case11. A double tube main shaft 12 including an inner path 12a and an outer path 12b is provided as a main shaft. An outer surface of the main shaft 12 is integrally connected to and rotatably incorporated into a rotor 13.

A feeding screw 22 which is connected to the rotating driving shaft 21 is provided under the bottom face of the hollow motor 10. A feeding nut (not shown in drawings) which is provided at a bottom of the hollow motor 10 is screwed by the feeding screw 22. As such, the hollow motor10 moves back and forth by the rotation of the feeding motor 20.

Fig. 1 illustrates a state in which the hollow motor 10 moves back, and Fig. 2 illustrates a state in which the hollow motor 10 moves ahead by the feeding motor 20.

The hollow motor 10 and the feeding motor 20 have the same structure as that of the well- known conventional motor except that the main shaft 12 includes the double tube structure, and the detailed description of these motors are omitted.

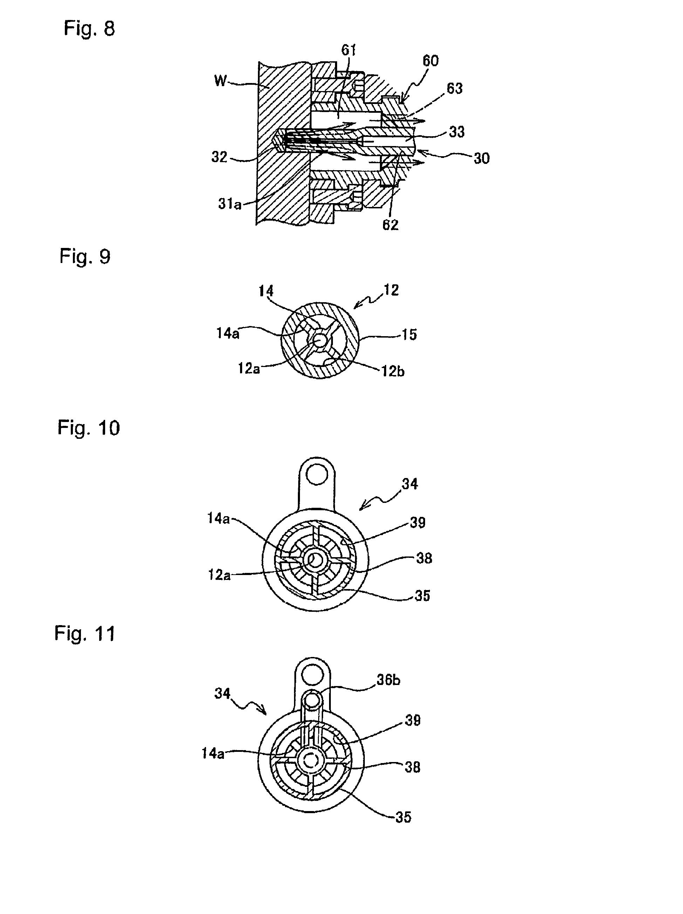

As shown in Fig. 9, the double tube main shaft 12 includes an integral structure that recites an inner tube 14 which includes a plurality of protrusions 14a on a circumference and an outer tube 15 which inserts and is connected to the inner tube 14. A hollow hole in the inner tube 14 is defined as an inner path 12a, and a void hole which is provided between the inner tube 14 and the outer tube 15, and between protrusions 14 a is defined as an outer path 12b.

A front end of the double tube main shaft12 is provided with a collet chuck16, and a drill30 is detachably exchanged by the collet chuck 16. A rear end of the double tube main shaft 12 is provided with an air-feeding hose 41 which connects with an air-feeding mechanism 40, and a dust collecting hose 51 which connects with a dust collecting mechanism 50.

The drill 30 includes a main body shaft 31a which has a twisted lead groove for discharging swarf, and a shank 31b which has a larger diameter than that of the main body shaft 31 a. A venting hole 33 is provided over an axis extending from the shank 31b to the main body shaft 31a. The drill 30 makes the venting hole 33 to linearly communicate with the inner path 12a by mounting the shank 31 to the double tube main shaft 12 with the collet chuck16.

The main body shaft 31 a includes a drill blade 32 at the head part of the front end, and is provided so that the compressed air supplied through the inner path 12a jets from the proximity of the drill blade 32 through the venting hole 33.

The venting hole 33 is provided so that the diameter of the main body shaft 31a is smaller than that of the shank 31 b and the jetting speed of the compressed air from the main body shaft 31a is faster than that of the shank 31b.

The drill 30 is made of cemented carbide and high-speed steel. The drill blade 32 may be surface treated or be coated by carbide or nitride as appropriate, and a head part including the drill blade 32 may be detachable, in other words may be blade exchangeable style.

The drill 30 may recite a structure in which boring is executed during rotatably moving forward by driving force of the hollow motor 10 and the feeding motor 20, but is not limited to this structure. As described in a previous application (Japanese laid-open patent publication 2009-806) filed by the applicants, a top lead angle of twisted lead groove in front end head may be set to any specific value (from -10 to +10 degrees), and outer periphery rake angle may be set to any specific value (from 20 to 40 degrees), when, for example, a fiber-reinforced composite material such as CFRP is used as a work piece, the shape of the blade may be changed in order to enhance cutting efficiency.

As shown in Figs. 1 and 4, a top of the hollow motor10 is provided with a first hood 17 which covers a front part of the collet chuck 16 provided at a front end of the double tube main shaft 12. A second hood 4 which covers a front part of the first hood 17is provided at a front end of the housing 1, and the first hood 17 is engaged with the second hood 4 so that the first hood 17 is slidably mounted to the second hood 4. Specifically, an outer periphery of the drill 30 mounted to the collet chuck16 is covered with and protected by the first hood 17 and the second hood 4, and a tip path18 which communicates with an outer path12b of the double tube main shaft 12 is provided around the drill 30.

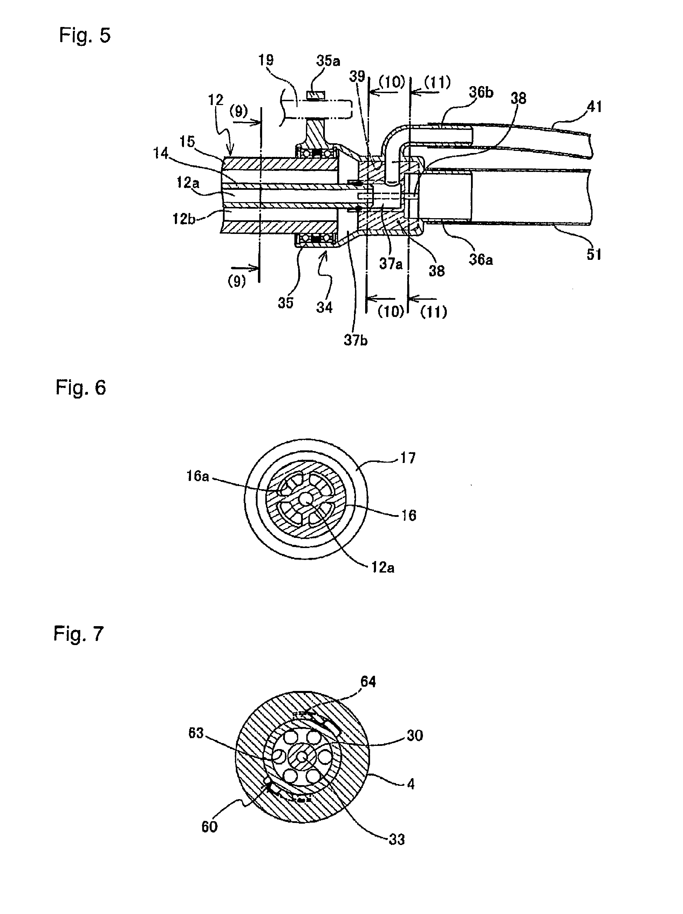

Therefore, as shown in Fig. 6, a venting hole16a which communicates the outer path12b of the double tube main shaft12 with the tip path18 is provided at the collet chuck16.

Note that the first hood 17, the second hood 4 is integrally provided with the motor case11 and the housing 1, but it is preferable that they are detachably attached to each other as separated members.

A biforked joint tool 34 is attached to a rear end of the double tube main shaft 12, and the air-feeding hose 41 and the dust collecting hose 51 are connected with the biforked joint tool 34.

The biforked joint tool 34 includes a joint part 35 which is engaged with an outer periphery of the rear end of the outer tube 15 of the double tube main shaft12. A connecting tube 36a having a larger diameter is provided at the center of the rear end of the biforked joint tool 34. A connecting tube 36b having a smaller diameter is integrally or separately provided around the connecting tube 36a.

The biforked joint tool 34 locks an arm 35a which protrudes from the joint part 35 onto a baffle 19 which protrudes from the motor case11 of the hollow motor10, which prevents a rotation.

As shown in the enlarged view in Fig. 5, an inner room 37a and an outer room 37b are provided at the joint part 35. The inner room 37a is engaged with a rear end of the inner tube 14 of the double tube main shaft 12 rotatably and hermetically, and communicates with an inner path 12a. The outer room 37b is engaged with the outer tube 15 of the double tube main shaft 12 rotatably and hermetically, and communicates with a rear end of an outer path 12b.

Within the joint part 35, a plurality of ribs 38 reinforce spaces between an outer face of a rear part and the inner room 37a, and a connecting hole 39 is provided between ribs 38. The connecting tube 36a communicates with the outer room 37b via the connecting hole 39. Specifically, the connecting tube 36a which connects to the dust collecting hose 51 is provided at a rear part of the inner path 12a and communicates with the outer path12b.

An inner end of the connecting tube 36b connects to the inner room 37a of the joint part 35, and an outer end of the connecting tube 36b connects to the air-feeding hose 41. Specifically, a compressed air sent from the air-feeding hose 41 is supplied from the connecting tube 36b to the inner path 12a via the inner room 37a.

As shown in Fig. 3, the air-feeding mechanism 40 includes a compressor 40a which generates a compressed air, and an air-feeding hose 41 and so forth which extend from the compressor 40a. The compressed air is supplied from the air-feeding hose 41 to the double tube main shaft 12 in the hollow motor10, and supplied to the vicinity of the drill blade 32 of the drill 30 via the inner path 12a of the main shaft12. According to this air-feeding mechanism 40, a compressed air is preferably supplied via condenser so that the cooled compressed air is supplied, and the hollow motor 10 and the drill blade 32 of the drill 30 may be cooled. With this configuration, the dust collecting efficiency may be enhanced by maintaining the cutting efficiency of the drill blade and braking swarf into minute solid pieces.

A dust collecting mechanism 50 includes a dust collecting machine 50a having a suction function and a dust collecting hose 51 extending from the dust collecting machine 50a. Since the dust collecting hose 51 connects with the double tube main shaft 12 and is sucked, a strong suction power is generated in the first hood 17 and the second hood 4 via the outer path 12b of the main shaft 12. Swarf generated in the boring process by the drill blade 32 is recovered in a dust collecting machine 50a by this suction function. The dust collecting mechanism 50 preferably includes a cyclone 52 in the dust collecting machine 50a, which further improves the suction efficiency of swarf being recovered.

The reference number 53 in Fig. 3 indicates a controller which incorporates an electric source and a control part. The hollow motor 10 and the feeding motor 20 which are controlled by this controller 53 are electrically connected by electric cords 54 and 55.

As shown in Figs. 1 and 3, since the drill device A is handy type, a carrier- handle 5 which is used for carrying is provided at the upper face of the housing 1. A handling rod 6 which functions as a support member in a boring process, and an operational rod 7 which controls starting and stopping of the hollow motor10 and feeding motor 20 are provided at the bottom face; and the controller 53 is controlled by the operational rod 7. Specifically, the drill device A is handy type, and represents a systemized device in which the hollow motor 10 functions as a boring main body is connected with - ancillary equipments such as the air-feeding mechanism 40, the dust collecting mechanism 50, and the controller 53.

A process of boring works with the drill device A is explained by drawings such as Figs. 4 and 8. When CFRP is bored as a work piece W, a jig 60 is attached so as to be fixed along with a surface of the work piece W, and the drill device A is set to the jig 60.

The jig 60 is not restricted to any specific structure, and Figs 4 and 8 illustrate the jig 60 in a supporting tube structure which includes a cavity 61, an insertion opening 62 and a passing hole 63. The drill30 can be inserted into the front end of the insertion opening 62 so that the center axis of the drill 30 coincides with the center axis of the insertion opening 62, and a plurality of passing holes 63 is provided at the outer periphery of the insertion opening 62.

The front end of the second hood 4 which protrudes toward a front part of the housing 1 is engaged with the outer periphery in the front end of the jig 60, and a lock rim 64 which is locked by a slight rotation is provided.

A boring process begins when the handling rod 6 and the operational rod 7 are held by the user, the drill device A is set to the jig 60 by engaging the second hood 4 with the front end of the jig 60 and locking the second hood 4 to the lock rim 64, and an activating switch 7a attached to the operational rod 7is turned on.

First, when the feeding motor 20 is activated, the hollow motor10 and the drill 30 move forward, and then move into the cavity 61 through the insertion opening 62 of the jig 60.

Next, the hollow motor10 is activated, and the drill 30 rotates at the predetermined rotation number via the double tube main shaft12 at a proper timing. The compressed air supplied from the air-feeding hose 41 of the air-feeding mechanism 40 to the inner path12a of the double tube main shaft 12 jets in the proximity of the drill blade32 of the main body shaft 31a through the venting hole 33 of the drill 30.

When the drill 30 advances, the drill blade 32 contacts with the work piece W, and then a boring process or a drilling process starts, the drill 30 advances while the work piece W is cut by the rotation of the drill blade32, as shown in Figs. 4 and 8. While swarf is generated around the drill blade 32 during the boring process and harmful gas is sometimes generated, the swarf moves upward along the lead groove of the main body shaft 31a and is sucked into the outer path 12b of the double tube main shaft 12 by the compressed air supplied from the air-feeding mechanism 40 and jetted in the proximity of the drill blade 32. Specifically, since the compressed air is jetted around the drill blade 32 by the air-feeding mechanism 40, and the air in the outer path 12b of the double tube main shaft 12 is sucked by the dust collecting mechanism 50, the second hood 4 through the venting hole 16a of the collet chuck 16 and the tip path 18 of the first hood 17 is in a state of negative pressure. The swarf and so forth are sucked from the lead groove for discharging of the main body shaft 31 a to the outer path 12b via the venting hole 16a, and are recovered in the dust collecting machine 50a via the dust collecting hose 51 while the swarf moves upward and toward the tip path18 in the second hood 4 and the first hood 17 via the cavity 61 and the passing hole 63 of the jig 60.

Therefore, according to the embodiment described above, the swarf and the harmful gas which are generated in the process of the boring, may be securely recovered, so that it improves working conditions.

Since the hollow main shaft recites a double tube structure and an air-supplying path which supplies the compressed air from the air-feeding mechanism 40 to the periphery of the drill blade 32 of the drill 30 and the dust collecting route which sucks and recovers the swarf and so forth from the drill blade 32 to the dust collecting mechanism 50 are not exposed to the periphery of the hollow motor 10 and the housing 1, the structure of the drill device A is simplified, the drill device A is easy to use, and work efficiency during the boring process may be improved, even though the outer diameter of the double tube main shaft 12 is slightly large.

Note that performance settings such as activating timings of the hollow motor 10 and the feeding motor 20 are set by the controller 53. Therefore, performance settings may not necessarily correspond to the descriptions described above, and may be changed as appropriate. Especially, the rotation number of the hollow motor 10 and the feeding speed and the feeding length of the feeding motor 20 are set in view of the material and the thickness of the work piece W.

According to the drawings, only one activating switch 7a is provided at the operational rod 7, but a separate activating switch may be provided for the hollow motor 10 and for the feeding motor 20 so that the hollow motor 10 and the feeding motor 20 are activated at a proper timing in accordance with the progress of the boring based on the judgment of the user.

According to the embodiment described above, the work piece employs CFRP, but the work piece is not limited to CFRP, and the work piece may employ other fiber-reinforced composite material such as FRP. Furthermore, the work piece employs other metal material such as aluminum alloy when the drill with a high-strength blade is used.

According to the embodiment described above, the feeding motor as a driving source is arranged at a lower portion near the hollow motor. However, both motors may be arranged on the same axis, for example, a liner-rotational driving device which transmits a rotation motion and a linear motion may be provided. The rotating motor (hollow motor) 10 and the feeding motor 20 which correspond to driving source are provided, but both motors are not necessarily provided, and the feeding motor 20 may be omitted. Furthermore, the embodiment described above exhibits a handy type drill device, but the present invention is not limited to this type of device. According to the embodiment described above, the outer periphery of the drill 30 is covered by the first hood 17 and the second hood 4 so that the air-feeding path of the compressed air is provided, but either one or both of the first hood 17 and the second hood 4 may be omitted when an alternative path is provided at the side of the jig.

### EXPLANATION OF SYMBOLS

A:drill device 10:hollow motor
11:motor case 12:double tube main shaft
12a:inner path 12b:outer path
l4:inner tube 15:outer tube
16:collet chuck 20:feeding motor
30:drill 31a:main body shaft
31b: shank 32:drill blade
33: venting hole 40: air-feeding mechanism
41: air-feeding hose 50: dust collecting mechanism
51: dust collecting hose

## Claims

1. A boring device comprising a main shaft which is rotated by a driving source and includes an inner path (12a) and an outer path (12b) which has a double tube structure, wherein a drill (30) which has a venting hole (33) on a axial center extending from a shank (31b) to the proximity of a blade (32) and a hood (4, 17) which covers an outer periphery of the drill is provided at a front end of a double tube main shaft (12), an air-feeding mechanism (40) which supplies a compressed air to the inner path (12a) and a dust collecting mechanism (50) which sucks an air in the outer path are connected to a rear end of the double tube main shaft (12), and a work piece (W) is bored while the compressed air is supplied around a drill blade (32) via the inner path so that swarf generated is recovered to the dust collecting mechanism via the outer path.

2. The boring device according to claim 1, wherein the driving source is a hollow motor arranged in a housing, and the double tube main shaft (12) is rotatably connected in a rotor of the hollow motor.

3. The boring device according to claim 1, wherein the driving source is a combination of a hollow motor and a feeding motor arranged in the housing, the double tube main shaft is rotatably connected in a rotor of the hollow motor, and the double tube main shaft is moved back and forth by the feeding motor so that the drill is fed by pitch.

4. The boring device according to claim 3, wherein the feeding motor is arranged at a lower portion near the hollow motor, and the hollow motor is moved back and forth by the driving force of the feeding motor via a feeding mechanism so that the double tube main shaft and the drill are fed by pitch.

## Patentansprüche

1. Eine Bohrvorrichtung umfassend,
eine Hauptwelle, welche von einer Antriebsquelle rotiert wird und einen inneren Pfad (12a) und einen äußeren Pfad (12b) aufweist welche eine Doppelrohr Struktur aufweist, wobei
ein Bohrer (30) welcher eine Abströmöffnung (33) auf einem axialen Zentrum aufweist, das sich von einem Schaft (31b) bis in die Nähe einer Schneide (32) erstreckt, und eine Haube (4, 17), welche den äußeren Umfang des Bohrers abdeckt, am Stirnende einer Doppelrohrhauptwelle (12) bereitgestellt werden,
eine Luftzufuhreinrichtung (40), welche den inneren Pfad (12a) mit Druckluft versorgt, und eine Staubsammeleinrichtung (50) welche Luft in den äußeren Pfad saugt, am rückwärtigen Ende der Doppelrohrhauptwelle (12) verbunden sind, und
ein Werkstück (W) gebohrt wird, während Druckluft mittels des inneren Pfads (12a) um eine Bohrerschneide (32) bereitgestellt wird, so dass erzeugte Späne über den äußeren Pfad an die Staubsammelvorrichtung zurückgeführt werden.

2. Die Bohrvorrichtung nach Anspruch 1, wobei die Antriebsquelle ein Hohlwellenmotor ist, welcher in einem Gehäuse angeordnet ist und die Doppelrohrhauptwelle (12) drehbar in einem Rotor des Hohlwellenmotors verbunden ist.

3. Die Bohrvorrichtung nach Anspruch 1, wobei die Antriebsquelle eine Kombination aus einem Hohlwellenmotor und einem Vorschubmotor ist, welcher im Gehäuse angeordnet ist, und die Doppelrohrhauptwelle (12) drehbar in einem Rotor des Hohlwellenmotors verbunden ist und die Doppelrohrhauptwelle (12) von dem Vorschubmotor vor und zurück bewegt wird, so dass der Bohrer durch Teilung vorgeschoben wird.

4. Die Bohrvorrichtung nach Anspruch 3, wobei der Vorschubmotor in einem unteren Teil in der Nähe des Hohlwellenmotors angebracht ist, und der Hohlwellenmotor von der Antriebskraft des Vorschubmotors mittels einer Vorschubeinrichtung vor- und zurückbewegt wird, so dass die Doppelrohrhauptwelle und der Bohrer durch Teilung vorgeschoben werden.

## Revendications

1. Un appareil de perçage comprenant un arbre principal qui est entrainé en rotation par une source d'entrainement et inclut un trajet intérieur (12a) et un trajet extérieur (12b) qui présentent une structure en double tube, dans lequel un foret (30) qui possède un orifice de soufflage (33) sur un centre axial s'étendant depuis un canon (31b) jusqu'à la proximité d'une lame (32) et un capot (4, 17) qui recouvre une périphérie extérieure du foret est disposé à une extrémité frontale d'un arbre principal à double tube (12), un mécanisme d'alimentation en air (40) qui délivre un air comprimé au trajet intérieur (12a) et un mécanisme de collecte des poussières (50) qui aspire un air dans le trajet extérieur sont reliés à une extrémité arrière de l'arbre principal à double tube (12), et une pièce d'oeuvre (W) est percée tandis que l'air comprimé est insufflé autour d'une lame (32) du foret via le chemin intérieur de sorte que les ébarbures générées soient récupérées en direction du mécanisme de recueil des poussières via le trajet extérieur.

2. L'appareil de perçage de la revendication 1, dans lequel la source d'entrainement est un moteur creux disposé dans un boitier, et l'arbre principal à double tube (12) est relié à rotation dans un rotor du moteur creux.

3. L'appareil de perçage de la revendication 1, dans lequel la source d'entrainement est une combinaison d'un moteur creux et d'un moteur d'amenée disposés dans le boitier, l'arbre principal à double tube étant relié à rotation dans un rotor du moteur creux, et l'arbre principal à double tube étant déplacé vers l'avant et vers l'arrière par le moteur d'amenée de sorte que le foret soit amené par degrés.

4. L'appareil de perçage de la revendication 3, dans lequel le moteur d'amenée est disposé dans une partie inférieure à proximité du moteur creux, et le moteur creux est déplacé vers l'avant et vers l'arrière par la force d'entrainement du moteur d'amenée via un mécanisme d'amenée de sorte que l'arbre principal à double tube et le foret soient amenés par degrés.
